# EUROPEAN PATENT APPLICATION

(11) **EP 4 778 379 A1**
(43) Date of publication of application: **22.07.2026**
(21) Application number: 25213842.5
(22) Date of filing: 06.11.2025
(51) Int. Cl.: A01D 34/66

(54) **A GRASS CUTTER**

(30) Priority: 15.01.2025 GB 202500519; 15.05.2025 GB 202507525
(71) Applicant: S&A Group Holdings Limited, Hereford HR1 3ET (GB)
(72) Inventor: PALMER, Edward John Francis, Abbey Dore, HR2 0AE (GB); OWENS, Austin William, Leominster, HR6 9HP (GB)
(74) Representative: Haseltine Lake Kempner LLP

(57) **Abstract**

A plant cutting device comprising: a mount arranged to couple to a vehicle; a cutter arranged to cut vegetation; a boom arranged to support the cutter, the boom being pivotally coupled to the mount at a first pivot point; a first biasing member arranged to exert a first force on the boom to generate a moment about the first pivot point in a first direction; and a second biasing member arranged to exert a second force on the boom to generate a moment about the first pivot point in a second direction, the second direction being opposite to the first direction, wherein the biasing members are arranged to exert opposing forces on the boom such that the boom lies at an equilibrium orientation unless displaced in the first or second direction by an external force and to return the boom to the equilibrium orientation after removal of the external force.

## Description

### Background

In the field of vegetation cutting, such as grass cutting, it may be necessary to cut vegetation around an obstacle such as a post or tree. This may be carried out using a small tool, such as a manually driven lawnmower, and may involve the tool being manoeuvred around the obstacle in order to cut vegetation adjacent to the obstacle. However, where there is a desire to cut vegetation over a large area, it may be undesirable to use a small tool as this may be time consuming.

### Summary of the Invention

According to a first aspect of the invention, there is provided a plant cutting device comprising: a mount arranged to couple to a vehicle; a cutter arranged to cut vegetation; a boom arranged to support the cutter, the boom being pivotally coupled to the mount at a first pivot point; a first biasing member arranged to exert a first force on the boom to generate a moment about the first pivot point; wherein the first biasing member is arranged to exert a first force on the boom when the boom is displaced from an equilibrium orientation such that the boom lies at the equilibrium orientation unless displaced in a first direction or a second direction by an external force, the force being arranged to return the boom to the equilibrium orientation after removal of the external force.

According to a second aspect of the invention, there is provided a plant cutting device comprising: a mount arranged to couple to a vehicle; a cutter arranged to cut vegetation; a boom arranged to support the cutter, the boom being pivotally coupled to the mount at a first pivot point; a first biasing member arranged to exert a first force on the boom to generate a moment about the first pivot point in a first direction; and a second biasing member arranged to exert a second force on the boom to generate a moment about the first pivot point in a second direction, the second direction being opposite to the first direction, wherein the biasing members are arranged to exert opposing forces on the boom such that the boom lies at an equilibrium orientation unless displaced in the first or second direction by an external force and to return the boom to the equilibrium orientation after removal of the external force.

In this way, the cutter may be supported on the boom and may move around an obstacle when cutting vegetation. The first and second biasing members may act to keep the cutter in an equilibrium position, cutting vegetation in a fixed area relative to the vehicle while the vehicle is not near to an obstacle, and may allow the cutter to be displaced relative to the vehicle by an obstacle, such that the cutter may move around the obstacle while the vehicle may travel in a consistent direction and not change course due to the obstacle.

Further, by providing two biasing members, the vehicle may be driven in two opposite directions relative to an obstacle and the cutter may be displaced in two directions, allowing the cutter to cut vegetation around obstacles whether the vehicle is driven forwards or in reverse.

The first and second biasing members may be fixed to the mount at a first fixing point. Alternatively, the first and second biasing members may be rotatably coupled to the mount at a first biasing member pivot point. Generally, the ends of the first and second biasing members that are coupled to the mount may be coupled to the mount at adjacent locations.

The first and second biasing members may be pivotally coupled to the boom. This may allow a greater range of movement for the boom, as the boom may rotate relative to the biasing members.

The biasing members may each comprise a sliding piston slidably coupled within an outer cylinder, the outer cylinder and the sliding piston together defining a variable volume chamber containing a gas. The first and second biasing members may be gas springs. Gas springs may provide a degree of damping, such that the cutter may not bounce off obstacles, allowing closer cutting around obstacles. The cutter may also return to an equilibrium position more quickly. Alternatively, the biasing members may be springs.

The cutter may comprise a cutter head having a cutting member extending therefrom and a bump ring surrounding the cutter head, the bump ring being arranged to prevent the cutter head from contacting external objects. The bump ring may thereby protect the cutter head to prevent damage to the cutter head.

The bump ring may be rotatably coupled to the cutting head. In this way, the bump ring may roll around an obstacle. This may allow the cutter to remain a fixed distance from the obstacle as the vehicle moves past the obstacle. Disengagement of the bump ring from the obstacle would cause the cutting head to move away from the obstacle, meaning that vegetation close to the obstacle would not be cut. By being rotatable, the bump ring may remain better engaged with the obstacle and so vegetation may be cut more evenly closer to the obstacle.

The cutter may comprise a motor coupled to the cutter head via a drive shaft, and the bump ring may be rotatably mounted on the drive shaft such that the bump ring is rotatable relative to the drive shaft. In this way, the bump ring may rotate freely and may not be fixed to rotate at the same speed as the cutting member. Mounting the bump ring on the drive shaft may also provide a straightforward and compact mounting arrangement for the bump ring.

The bump ring may have a diameter that is substantially similar to a cutting diameter of the cutting member. The cutting member may be rotatable about an axis to cut vegetation and may therefore define a cutting diameter. The bump ring may have an outer diameter that is substantially similar to the cutting diameter of the cutting member, such that vegetation may be cut substantially up to an obstacle in contact with the bump ring, while damage to the cutting member may be avoided.

The boom may be rotatable about a range of at least 140°. The boom may be rotatable 70° from the equilibrium in the first direction and 70° from the equilibrium in the second direction. This may allow the boom to move the cutting member a sufficient distance to pass around obstacles.

According to a third aspect of the invention, there is provided an agricultural vehicle comprising the plant cutting device of the first aspect. The agricultural vehicle may be arranged to carry out further agricultural activities, such as crop cutting, crop picking, pesticide or biological control agent dispensation or UV treatment of crops.

The vehicle may further comprise at least two wheels aligned in a direction of travel, and the boom may lie perpendicular to the direction of travel in the equilibrium orientation. The agricultural vehicle may comprise a tunnel aligned in the direction of travel, the tunnel being arranged to pass over or under rows of crops. The boom may lie perpendicular to the direction of travel to cut a greater area of vegetation and to cut vegetation around obstacles that the wheels of the vehicle may not pass over.

The boom may be moveable to an orientation where the direction from the first pivot point to the cutter is parallel to the direction of travel of the vehicle and to an orientation where the direction from the first pivot point to the cutter is opposite to the direction of travel of the vehicle. In this way, the cutter may be moved directly behind the pivot point. This may allow the vehicle to pass close to obstacles without the cutter becoming trapped by the obstacle.

The plant cutting device may be a first plant cutting device, and the agricultural vehicle may further comprise a second plant cutting device according to the first aspect, the boom of the first plant cutting device extending in an opposite direction to the boom of the second plant cutting device. In this way, the first and second plant cutting devices may cut vegetation over a larger area as the vehicle travels.

The agricultural vehicle may further comprise: a vehicle body, one or more vehicle body rails fixed to the vehicle body, a mounting plate upon which the first and second plant cutting devices are mounted, one or more mounting plate rails fixed to the mounting plate and arranged to slidably and releasably engage with the vehicle body rails, The mounting plate rails and vehicle body rails may provide a convenient means for coupling the plant cutting devices to and decoupling the plant cutting devices from the vehicle body.

The plant cutting device may further comprise a cover disk, the cover disk extending radially outwardly from the cutter head, having a radius the same as or greater than the cutting member, and defining a solid surface to prevent access to the cutting member from above. The cover disk may prevent a user from contacting the cutting member, improving the safety of the plant cutting device.

The plant cutting device may further comprise a bump stop arranged adjacent to the biasing members to prevent the cutter from contacting the biasing members. In this way, the chance of damage to the cutter, including to the cutter head, and to the biasing members may be reduced. In particular, the chance of damage when contacting an obstacle that may cause the cutter to move a further distance from the equilibrium position than is expected may be reduced.

The plant cutting device may further comprise a retaining member arranged to engage with the cutter to maintain the cutter at a second orientation different from the equilibrium orientation. This may allow the cutting head to cut plants at a different position relative to the vehicle without the control of the vehicle being altered.

### Brief Description of the Drawings

The invention will now be described, by way of example only, with reference to the accompanying figures, in which:
Figure 1 shows an agricultural vehicle according to the invention;
Figure 2 shows a side view of a plant cutting device according to the invention;
Figures 3a to 3c show top view of the plant cutting device of Figure 2 in different positions;
Figure 4 shows a plant cutting system according to the invention;
Figure 5 shows a second plant cutting device according to the invention;
Figure 6 shows a third plant cutting device;
Figures 7a and 7b show a suspension system according to the invention;
Figure 8 shows a second suspension system according to the invention;
Figure 9 shows a cross-sectional view of a plant cutting device according to the invention
Figures 10a and 10b show a fourth plant cutting device according to the invention; and
Figures 11a and 11b show a second plant cutting system according to the invention.

### Detailed Description

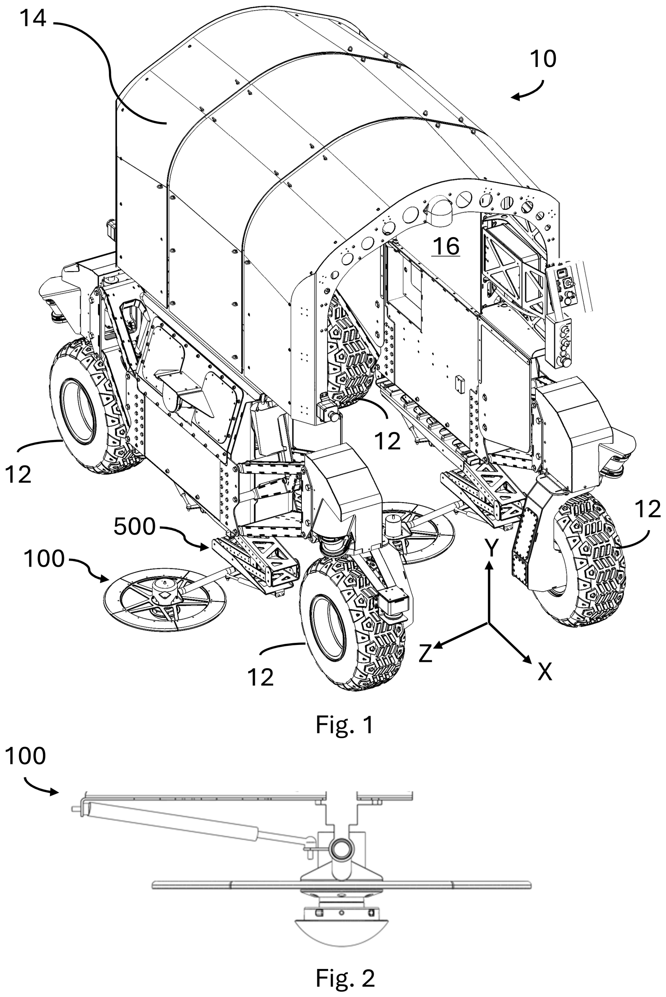

Figure 1 shows a agricultural vehicle 10. The agricultural vehicle 10 has four wheels 12 oriented in a direction of travel X of the vehicle, although one or more of the wheels 12 may be rotatable about a vertical axis Y to steer the vehicle 10 or to move the vehicle 10 sideways. In some cases, all four wheels 12 may be rotatable about a vertical axis Y to allow the vehicle to move sideways.

The vehicle 10 also has a body 14, which defines a tunnel 16 therethrough, the tunnel being arranged to travel over rows crops in the direction of travel X of the vehicle 10. The vehicle 10 may alternatively have a hull that is arranged to travel under rows of crops, where the cops may be arranged on pipes that are suspended from a ceiling. The vehicle also has a plurality of plant cutting devices 100, which extend in a direction Z away from the vehicle body 14, the direction Z being perpendicular to the direction of travel of the vehicle X, which is defined by the orientation of the tunnel 16.

The vehicle 10 has four plant cutting devices 100, of which two can be seen in Figure 1. The two visible plant cutting devices 100 extend in a first direction along the z-axis and the two other plant cutting devices, which are not visible, extend in an opposite direction along the z-axis and are offset from the visible plant cutting devices 100 along the x-axis. In this way, the plant cutting devices 100 may cut a wide area of plant matter as the vehicle travels along the x-axis.

Each plant cutting device 100 is arranged on a suspension system 500, which is arranged to maintain the respective plant cutting device 100 a fixed distance above the ground as the vehicle 10 travels over an uneven surface.

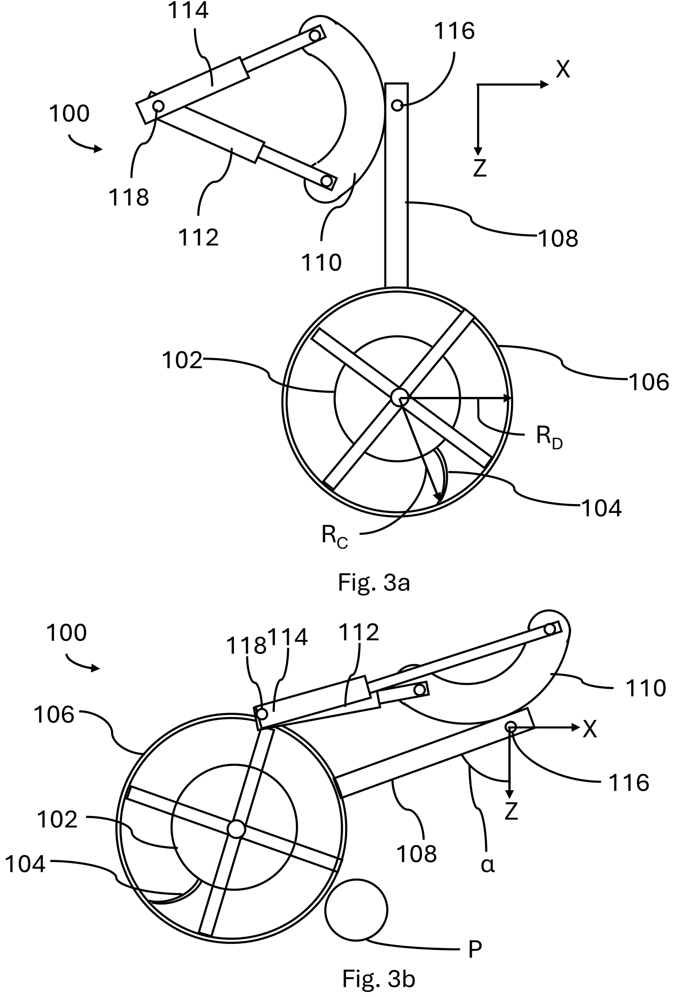

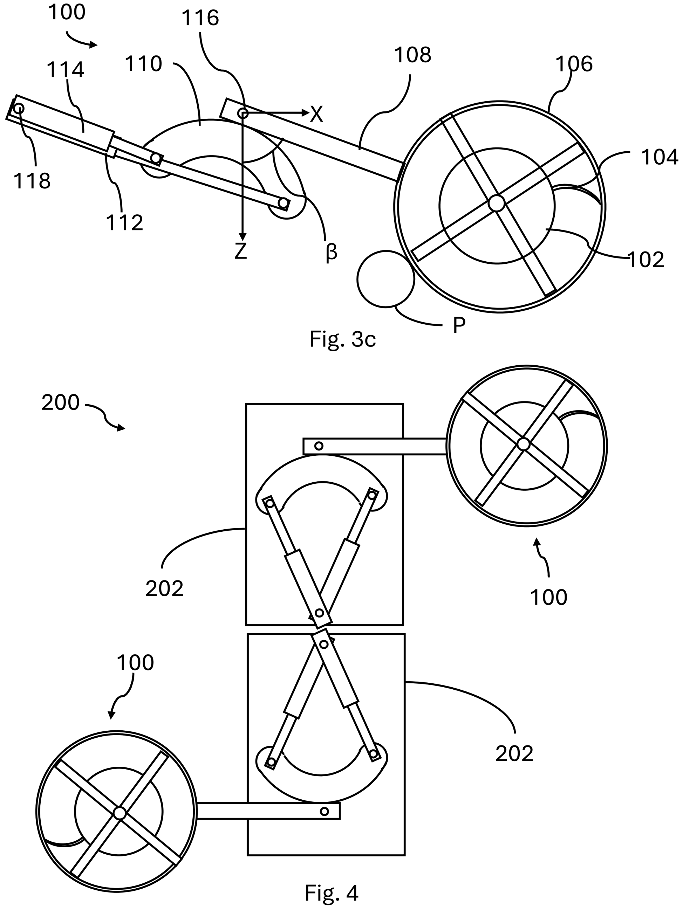

Figure 2 shows a detailed side view of a plant cutting device 100, which is also shown in a plan view in Figures 3a, 3b and 3c.

The plant cutting device 100 includes a cutter formed from a cutting head 102 and a cutting cord 104, the cutting cord 104 extending radially outwardly from the cutting head 102 and being arranged to rotate about an axis such that the cord 104 cuts vegetation as it is rotated. It will be understood that more than one cord 104 may extend from the cutting head 102 and that the number of cords 104 may be selected as required based on cord wear and vegetation thickness. The cutting cord 104 may generally be referred to as a cutting member and may be a rigid blade or any other cutting means.

A bump ring 106, which may also be referred to as a bump disc 106, surrounds the cutting head 102. The bump ring 106 is supported on spokes that extend from a central point where the disc 106 is rotatably coupled to the cutter head 102. However, the bump ring 106 may be formed as a solid disc or may have any other structure.

The cutter head 102 is supported on a boom 108, which extends in the Z direction, i.e. perpendicular to the direction of travel of the vehicle as defined by the orientation of the tunnel 16 of the vehicle body 14, when the boom 108 is in the equilibrium position. The boom 106 is mounted pivotably at a pivot point 116, which may act as a mount to couple the plant cutting device 100 to the vehicle body 14. The boom 108 is fixed to a wishbone 110, which is a curved member coupled to first and second biasing members 112, 114. The shape of the wishbone 110 may be tailored to manage extensions of the biasing members 112, 114 and the range of movement of the boom 108. The wishbone 110 may also be referred to as a boomerang and may be boomerang-shaped. The biasing member 112, 114 may be pivotally coupled to the wishbone 110 to exert biasing forces on the wishbone 110 such that the biasing members 112,114 are arranged to position the boom 108 at the equilibrium position when external forces are not present. The wishbone 110 may be omitted and the biasing members 112, 114 may be coupled directly to the boom 108.

The first and second biasing members 112, 114 may be gas springs and may comprise a sliding rod or piston slidably coupled within a cylinder to define a variable volume chamber containing a gas such as air, the volume of gas being arranged to exert an outward force on the rod. The biasing members 112, 114 are fixed to the vehicle body 14 at fixing point 118, although the biasing members 112, 114 may alternatively be pivotally coupled to the vehicle body 14 at the pivot point 118.

By using two biasing members, the boom 108 may be maintained in the equilibrium position and allowed to move in two directions, as opposed to being held against a fixed stop.

The bump ring 106 may have an outer radius R_{D}, which may define a closest distance to an axis of rotation of the cutting cord 104 to which an object might be. The cutting cord 104 may have a cutting radius Rc, which may define a cutting area of the cutting cord 104. The Radii R_{D}, R_{c} may be substantially similar, such that the cutting cord 104 may cut vegetation up to the position of an obstacle.

The plant cutting device may comprise a mount to couple the plant cutting device to a vehicle. The mount may be formed of fixings at the pivot point 116 and the fixing point 118 or pivot point 118.

As shown in Figure 3b, the bump ring 106 may contact an obstacle such as a post P, which may exert a reaction force on the bump ring 106, such that the bump ring 106 and the cutting head 102 may be displaced from the equilibrium position. As the cutter head 102 moves from the equilibrium position, the boom 108 may pivot about pivot point 116, the first biasing member 112 may shorten and the second biasing member 114 may lengthen. It will be understood that biasing forces from the first and second biasing members 112, 114 may each urge the boom 108 back toward the equilibrium position or that a resultant moment produced by the two biasing members 112, 114 may urge the boom108 toward the equilibrium position. The boom may rotate an angle α due to deflection by the obstacle P, which may be up to 70° from the equilibrium position in order to allow the cutting device 100 to move past the obstacle without a need for the vehicle carrying the cutting device to deviate from an intended motion path.

Further, as shown in Figure 3c, the vehicle may also move in the opposite direction along the x-axis and the bump ring 106 may contact an obstacle P on an opposite side of the bump ring 106. Consequently, the boom 108 may pivot about the pivot point 116 in an opposite direction. The boom 108 may pivot in the opposite direction up to a second angle β. The second angle β may be 70°, meaning that the boom 108 may have a total rotational range of 140°. The rotational range of the boom 108 may be centred on the equilibrium position.

In some cases, the boom may be rotatable about an angle greater than 140°, and optionally may be rotatable to become parallel to the direction of travel of a vehicle to which the plant cutting device is coupled.

Figure 4 shows a plant cutting system 200 including first and second plant cutting devices 100. The plant cutting devices 100 are each mounted on a mounting plate 202, which may be a bottom plate of a suspension system, such as the suspension system 500 described below, or may be on an underside of a vehicle body such as the vehicle body 14.

The plant cutting devices 100 each have a boom 108 extending in opposite directions from respective pivot points 116 when in the equilibrium position. The plant cutting devices 100 may be arranged so that the biasing members are arranged between the cutting heads. Put another way, the fixing points at which the biasing members are fixed to the vehicle body may be arranged between the respective pivot points of the booms of the plant cutting devices 100. In this way, it may be avoided that the bump rings of the cutting devices may contact an adjacent cutting device 100.

The plant cutting system 200 may be arranged between wheels of a vehicle that are aligned in a direction of travel X of the vehicle. The vehicle may have two plant cutting systems 200, with a first plant cutting system 200 on a left side of the vehicle and a second plant cutting system 200 on a right side of the vehicle. Generally, the plant cutting systems 200 may be arranged on either side of a tunnel or hull of the vehicle.

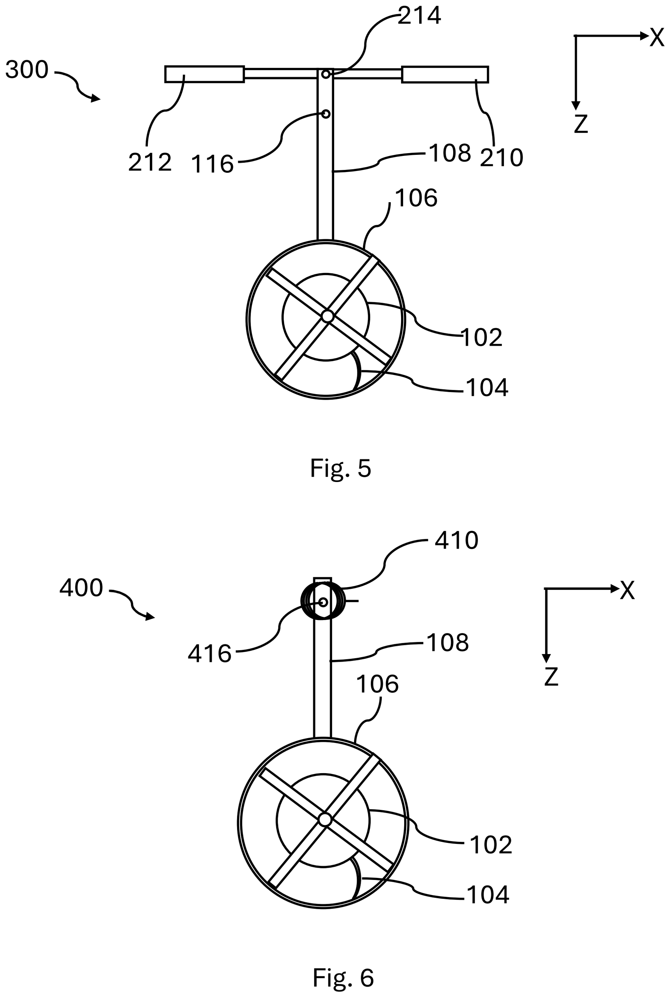

Figure 5 shows a second plant cutting device 300. The plant cutting device 300 has a cutting head 102, cord 104, bump ring 106 and boom 108 that are substantially similar to those described above. The boom 1088 is rotatable about a pivot point 116. The plant cutting device 300 has first and second biasing members 210, 212, which may be springs or elastic members as described above. The biasing members 210, 212 may be pivotably coupled to the boom at pivot point 214. The biasing members 210, 212 may be pivotally coupled to a vehicle body or a mount at an end opposite to where they are coupled to the boom 108.

In this case, the biasing members 200, 212 may be positioned perpendicular to the boom 108, and may be oriented in opposing directions. Generally, the biasing members may be arranged at any orientation such that the biasing members exert opposing moments on the boom 108 about the pivot point 116. The biasing members 210, 212 may also be arranged between the pivot point 116 and the cutting head 102, or such that the pivot point 116 is between the biasing members 210, 212 and the cutting head 102, depending on the packaging requirements of the cutting device 300.

Figure 6 shows a third plant cutting device 400 including a cutting head 102, a cutting cord 104, a bump disc 108 and a boom 108. The cutting device 400 also includes a single biasing member 410, which in this case is a coil spring 410, arranged about a pivot point 416 of the boom 108. The biasing member 410 may be anchored to a vehicle body or to a suspension system coupled to a vehicle body in order to providing a force to react the elastic biasing force.

In the plant cutting device 400, a single biasing member 410 may provide a force to maintain the boom 108 at the equilibrium position and to urge the boom 108 back toward the equilibrium position after displacement of the boom 108 in both directions. The boom 108 may be rotated clockwise or anticlockwise about the pivot about 416, against the biasing force of the coil spring 410 and the spring force may provide a moment in the first or second direction to cause the boom 108 to return to the equilibrium position.

In further alternative plant cutting devices, the boom may be coupled to a centre-seeking actuator, which may be an actuator arranged to arranged to provide a force toward a central position, the centre-seeking actuator being moveable in two directions from the equilibrium position. A centre-seeking actuator may therefore maintain the boom 108 at the equilibrium position and may return the boom to the equilibrium position after being displaced therefrom, such as due to contact with an obstacle.

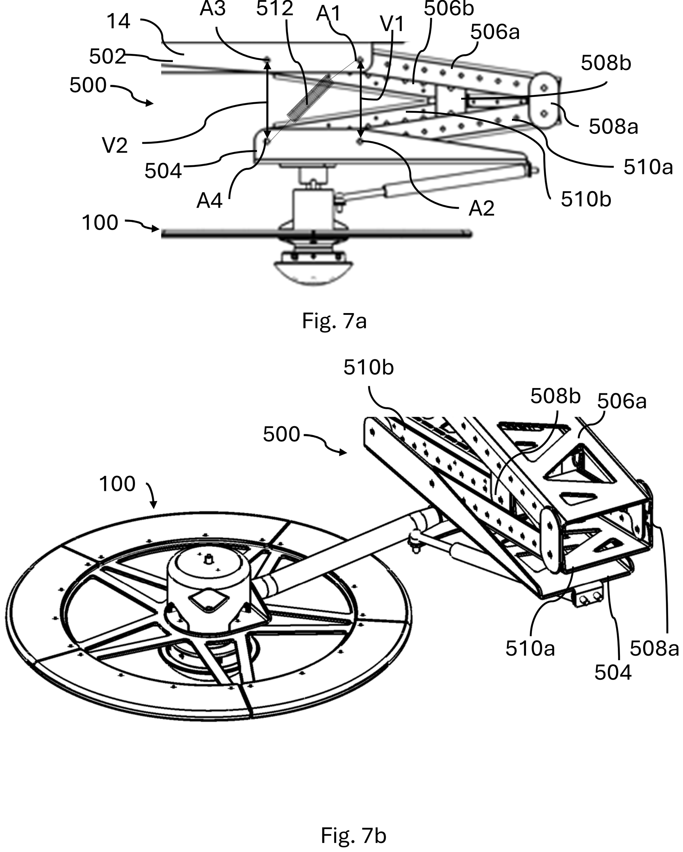

Figures 7a and 7b show a suspension system 500, which may be used with the agricultural vehicle 10 shown in Figure 1 and any of the cutting devices or cutting systems shown in Figures 1 to 6.

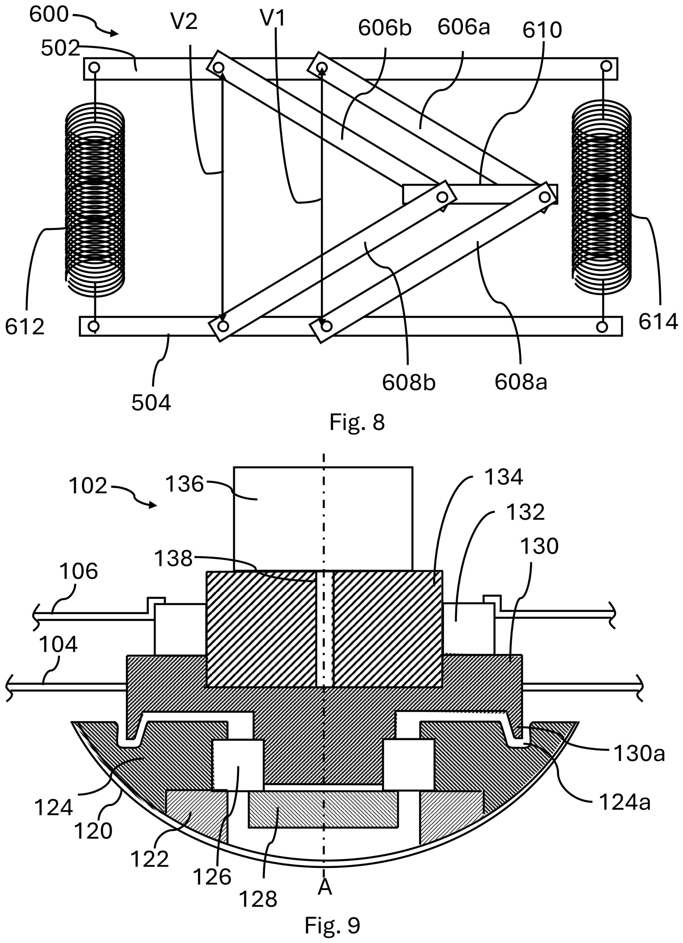

The suspension system is coupled to the body 14 via a vehicle coupling plate 502, which may also be referred to as a frame mount 502. The vehicle coupling plate 502 may be omitted where the below-described adjustment mechanisms may be coupled directly to a vehicle body. Alternatively, therefore, the fixings on the vehicle body may be considered as frame mounts. The suspension system 500 includes two adjustment mechanisms that form an adjustment system, each adjustment mechanism being formed of a series of pivotable trusses and connecting plates. The adjustment mechanisms are each arranged to allow a vertical distance between two pivot points to vary, to allow the cutting device 100 to be positioned a range of different distances from the vehicle body 14 as the vehicle 10 moves over uneven ground. In this way, the cutting device 100 may be maintained a fixed distance from the ground or may stay in contact with the ground as described below with reference to Figure 9.

The suspension system has a cutter mounting plate 504, which may also be referred to as a mount of a cutting device or a cutter mount 504. The cutter mounting plate 504 may be replaced by a frame or series of fixing points to provide an alternative cutter mount. The suspension system 500 is arranged to allow the distance between the mounting plate 502 and the cutter mount 504 to vary and may allow the mounting plate 502 to pivot relative to the cutter mount 504 or the suspension system 500 may be arranged to maintain the cutter mount 504 parallel to the mounting plate 502.

A first adjustment mechanism is formed by three adjustment members: a first adjustment member 506a, a second adjustment member 510a and a third adjustment member 508a. The first adjustment mechanism is coupled to the mounting plate 502 at a first pivot point A1 and to the cutter mounting plate 504 at a second pivot point A2 and is arranged to allow a vertical distance V1 between the first pivot point A1 and the second pivot point A2 to vary.

A second adjustment mechanism is formed by a first adjustment member 506b, a second adjustment member 510b, and a third adjustment member 508b. The second adjustment mechanism is coupled to the mounting plate 502 at a third pivot point A3 and coupled to the cutter mounting plate 504 at a fourth pivot point A4, and arranged to allow a second vertical distance V2 between the third pivot point A3 and the fourth pivot point A4 to vary.

In the first adjustment mechanism, a first end of the first adjustment member 506a is coupled to the mounting plate 502 at the first pivot point A1 and coupled to the third adjustment member 508a at an opposite end of the first adjustment member 506a. The third adjustment member 508a is coupled to the first adjustment member 506a at a first end and coupled to the second adjustment member 510a at a second end. The second adjustment member 510a may be coupled at a first end to the third adjustment member 508a and at a second end to the cutter mounting plate 504 at the second pivot point A2.

In some cases, the first adjustment member 506a may be directly coupled to the second adjustment member 510a and the third adjustment member 508a may be omitted. However, by using the third adjustment member 508a, the first and second adjustment members 506a, 510a a may be made the same and the adjustment member 508a may act as an adapter to couple the first and second adjustment members 506a, 510a.

The second adjustment mechanism formed of respective first, second and third adjustment members 506b, 510b, 508b is coupled to the mounting plate 502 at a third pivot point A3 and coupled to the cutter mounting plate 504 at a fourth pivot point A4 such that a vertical distance V2 between the third and fourth pivot points A3, A4 may vary. The adjustment members 506b, 508b, 510b of the second adjustment mechanism may be coupled together substantially similarly to the similarly named members of the first adjustment mechanism. The first and second adjustment members 506b, 510b of the second adjustment mechanism may have a smaller width (i.e. extent in the Z-axis) than the corresponding members the first adjustment mechanism, such that the members of the second adjustment mechanism may sit within the respective members of the first adjustment mechanism as shown in Figures 7a and 7b. The first and second adjustment members of the first adjustment may be C-shaped, having three trussed sides which are connected at right angles, and the sides may therefore define an internal volume, which may receive adjacent member of the second adjustment mechanism. In this way, the suspension system may be made more compact, while the C-shaped cross-section of the members may provide strength to the members to resist bending. To provide torsional strength, the first and second adjustment members 506a, b 510 a,b may be formed with C-shaped cross sections and the open sides of the C-shape of the first and second adjustment members 506 a,b 510 a,b may face each other in order to form an effective box-section.

The suspension system 500 also includes an elastic biasing member 512, which may be an elastic member such as a spring or may be a pneumatic gas spring. The elastic biasing member 512 may be replaced by an active biasing member such at an actively powered linear actuator. The biasing member 512 may be arranged between the mounting plate 502 and the cutter plate 504 in a diagonal orientation, i.e. neither vertical nor horizontal. In this way, the elastic biasing member 512 may provide a restoring force having a component in a vertical direction to reduce a force on the cutting device 100 and to support the weight of the suspension system 500.

The biasing member 512 may also act to stabilise the suspension system 500 in a direction of travel of the vehicle by having a component of the biasing force in a horizontal direction. The biasing member 502 may be coupled to the vehicle body at a position forward of a position which the biasing member 512 is coupled to the cutter mounting plate 504. The biasing member 512 may therefore exert a force on the cutter mounting plate, to resist backward movement of the cutter mounting plate 504 due to impacts of the cutting device 100 with obstacles as the vehicle moves forward. It will also be understood that more than one biasing member 512 may be used to support the suspension system 500.

The biasing member 512 may provide lateral stability to the suspension system 500 by constraining the cutter mounting plate 504 to be closer to the mounting plate 502.

Figure 8 shows a second suspension system 600. The suspension system 600 may have members that are shaped and/or arranged similarly to those shown in Figures 7a and 7b. The second suspension system 600 includes a vehicle mounting plate 502 and a cutter mounting plate 504, which may substantially similar to those described above.

The suspension system 600 includes a first adjustment mechanism formed of first adjustment member 606a, coupled to the vehicle mounting plate 502 at a first end and to a second adjustment member 608a at a second end. The second adjustment member 608a of the first adjustment mechanism is coupled at a first end to the first adjustment member 606a and at a second end to the cutter plate 504.

The suspension system 600 also includes a second adjustment mechanism comprising a first adjustment member 606b and a second adjustment member 608b, the first and second adjustment members 606b, 608b being substantially similar to the respective adjustment members of the first adjustment mechanism.

The suspension system 600 may also include a levelling member 610, which may be coupled to the first and second adjustment members 606a, b, 608 a, b. The levelling member 610 may create two 4-bar mechanisms: a first four bar mechanism being formed of the vehicle mounting plate 502, first adjustment members 606a, b and the levelling member 610, and a second four bar mechanism formed of the levelling member 610, the second adjustment members 608a, b and the cutter plate 504. In this way, the vertical distances between the vehicle mounting plate 502 and the cutter mounting plate 504 may be allowed to vary, while the vehicle mounting plate 502 and the cutter plate 504 should remain parallel (based on the distances between the relevant pivot connections being selected appropriately). This may allow a more even cutting of vegetation as the cutting head may also be constrained to remain parallel with the cutter mounting plate 504.

The suspension system 600 comprises two biasing members 612, 614, which may be springs or may be alternative biasing members such as pneumatic systems or linear actuators. It will be understood that more than two biasing members may be used in the suspension system 600 or only one biasing member may be used.

Figure 9 shows a cross-sectional view of a cutting head 102. The cutting head 102 has a skid 120, which is arranged to contact the ground to maintain the cutting cord 104 a fixed distance above the ground. The skid 120 may be hemispherical or may define a different portion of a sphere. Generally, the skid 120 may be convex as viewed the from the outside the skid 120. The skid may be formed from steel or any other resilient material, which may be a low friction material in order to reduce a frictional engagement between the skid 120 and the ground. In some cases, the skid may have an alternative shape, such as that of a ski or flat-plate.

The skid 120 is coupled to a lower skid fixing member 122 and an upper skid fixing member 124. The upper and lowest skid fixing members 122, 124 are arranged to support a bearing 126 that may be arranged between the skid fixing members 122, 124. In some cases, the skid fixing members 122, 124 may be formed as a single part or may be omitted where the bearing 126 may be coupled directly to the skid 120. Generally, each of the skid fixing members 122, 124, or the skid fixing members 122, 124 in combination, may be referred to as a skid member.

The bearing 126 may allow the skid 120 to rotate relative to the rest of the cutting heat 102 and in particular the skid 120 may be rotatable about a vertical axis A relative to a cord support member 130. Generally, the skid 120 may be freely rotatable in order to reduce the prospect of the skid become stuck on an obstacle in the ground. Overall, any arrangement allowing rotation of the skid 120 may be used, such as the skid 120 being rotatably coupled to the drive shaft of a motor.

The bearings 126 are supported on a bearing support member 128. The bearing support member 128 may be fixed to a cord support member 130, such that the cord support member 130 may support the weight of the bearings 126 and the skid 120. The bearing support member 128 may rotate with the cord support member 130 and this arrangement may reduce the number of bearings required within the cutting head 102.

The cord support member 130 has a previously-described cutting cord 104 extending therefrom, the cord extending radially outwardly from the cord support member 130 such that when a motor 136, which is coupled to the cord support member 120, rotates a driveshaft 138, the cord support member 120 is rotated by the motor 136, and the cord 104 is rotated to cut vegetation. The cord support member 130 may also be referred to as a cutter housing 130.

The inventors have realised a known problem of the ingress of debris, such as dirt and cut vegetation between the skid 120 and the cord support member 130. The ingress of debris may cause damage to the bearings 126. In order to reduce the ingress of debris, the cord support member is provided with a lip 130a extending toward a skid support member 124. The lip 130a may extend downwardly in order to reduce a gap between the cord support member 130 and the skid fixing members 124, 122.

Further, the upper skid fixing member 124 may comprise an annular trench 124a. The annular trench 124a may be a recess formed in an upper surface of the upper skid fixing member 124.The lip 130a may be received in the annular trench 124a, such that the lip 130a may extend below an upper surface of the upper skid fixing member 124. There may therefore be no line of sight between the inside of the cutter head 102 and the environment. This may thereby reduce the ingress of debris into the cutter head 102.

In some cases, the cord support member 130 may comprise a lip 130a and the upper skid fixing member 124 may not comprise a trench. In this case, the lip 130a may reduce ingress of debris by reducing the size of the gap between the cord support member 130 and the skid fixing members 122, 124, while not increasing frictional engagement between the two due to the small area of the bottom-surface of the lip 130a as compared to the bottom surface of the cord support member 130.

The bump ring 106 may be supported on a bearing 132, which may allows the bump ring 106 to rotate relative to the cutter mounting member 130 and also relative to a stationary reference frame, such as a motor adapter member 134, which may support the motor 136 and may couple to the boom 108. Generally, the bump ring 106 may be allowed to rotate freely. This may allow the bump ring 106 to roll along obstacles that the bump ring 106 contacts, which may reduce the chance of the cutter head 102 bouncing off the obstacle. Consequently, the bump ring 106 being rotatable may allow the plant cutting device 100 to cut vegetation more closely around an obstacle.

A motor 136 arranged to rotate the cord support member 130 and the cord 104 about the axis A may be provided at the top of the cutter head 102 and may be coupled to the cord support member 130 via a drive shaft 138. The motor may be fixed to a motor adapter member 134, which may support the motor and may be used to couple the cutter head 103 to a boom 108. The motor 136 may be an electric motor 136. Alternatively, the motor 136 may be replaced by any other torque-generating power source, such as an hydraulic turbine or a combustion engine.

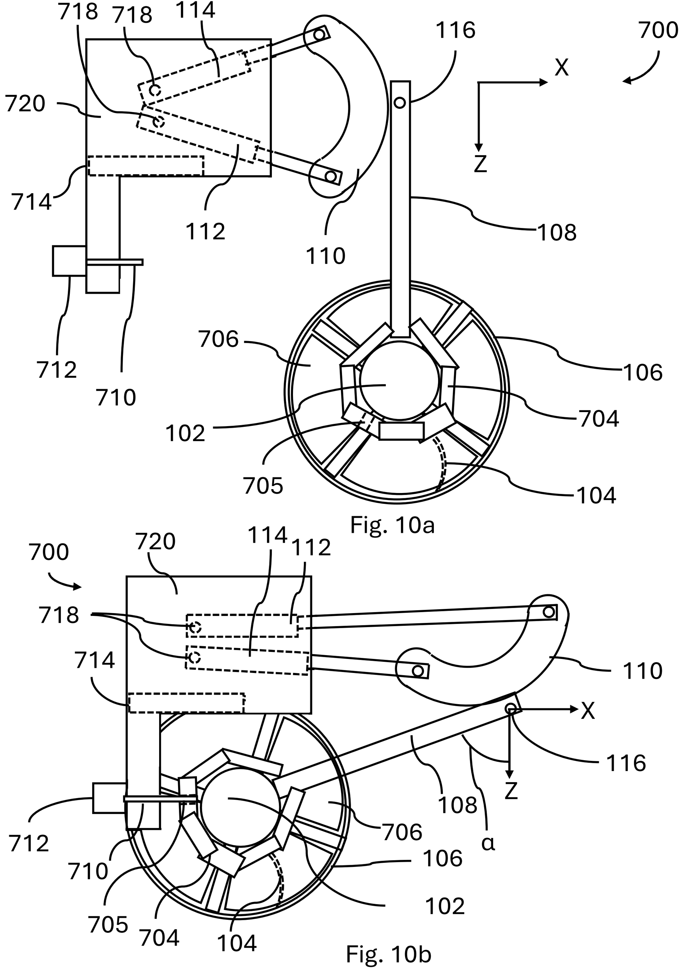

Figures 10a and 10b show a plant cutting device 700 in a plan view from above. The plant cutting device 700 includes biasing members 112, 114, a wishbone 110, a boom 108, a cutting head 102, a cutting member 104 and a bump disc 106 that are substantially similar to those described above. The biasing members 112, 114 may each be pivotably coupled to a mount 720 at a respective pivot point 718. The two pivot points 718 may be spaced apart on the mount 720. The mount 720 provides a plate for coupling the cutting device 700 to a vehicle or to a suspension system coupled to a vehicle as described above.

The plant cutting device 700 further comprises a cutter head protector 704. The cutter head protector 704 is formed of one or more a protective members arranged to surround the cutter head 102. The cutter head protector 704 may form a ring around the cutter head 102. In some cases, the cutter head protector 704 may be a discontinuous ring and may include a plurality of separate members. Generally, the cutter head protector 704 may be arranged to contact objects that would otherwise contact the cutter head 102. In particular, the cutter head protector 704 may be arranged to contact a bump stop 714, which may prevent excessive movement of the cutter head 102 away from the equilibrium orientation.

The plant cutting device 700 includes a retaining member 710 which is arranged to engage a retaining hole 705 formed in the cutter head protector 704 to hold the cutting head 102 in a second orientation different from the equilibrium position, which may also be referred to as a retained position. The retaining member 710 may be biased toward the cutter head protector 704 by a biasing member 712, which may be a spring and may be retracted by a force imparted by a user. The retaining member 710 may be received in a hole in another part adjacent the cutter head 102, such as in the boom 108. Alternatively, the boom 108 or cutter head 102 may include a retaining member such as a hook that may engage the mount 720 to retain the cutter head 102 relative to the mount.

In the retained position shown in Figure 10b, the cutting member 104 may be arranged to cut an area between the front and rear wheels of a vehicle. Further, where a cutting system is provided having more than one cutting device 700, the cutting devices may be arranged such that, when each cutting head 102 is in the retained position, cutting circles defined by the movement of the cutting members may overlap in a direction parallel to a longitudinal axis of the vehicle.

The mount 720 may include a bump stop 714. The bump stop 714 may be arranged to contact the cutter head 102 or the cutter head protector 704 when the cutter head 102 move to a limit of its motion. This may prevent the cutter head 102 from moving outside an expected range, which may otherwise damage components of the cutting device 700 or of the vehicle.

The plant cutting device 700 also includes a cover disc which may be formed of a plurality of solid disc segments 706. The solid disc segments 706 may prevent a user from contacting the cutting member 104 from above and may also prevent any debris or particles that may be emitted by contact with the cutting member 104 from being ejected upward, which may reduce the prospect of damage to nearby objects or harm to users. While the cover disc is shown as being formed from four segments 706, it will be understood that the cover disc may be formed from two segments, from a single piece or from any number of segments greater than two. The cover disc may be supported by one or more spokes that may support the bump disc 106 and/or by the bump disc.

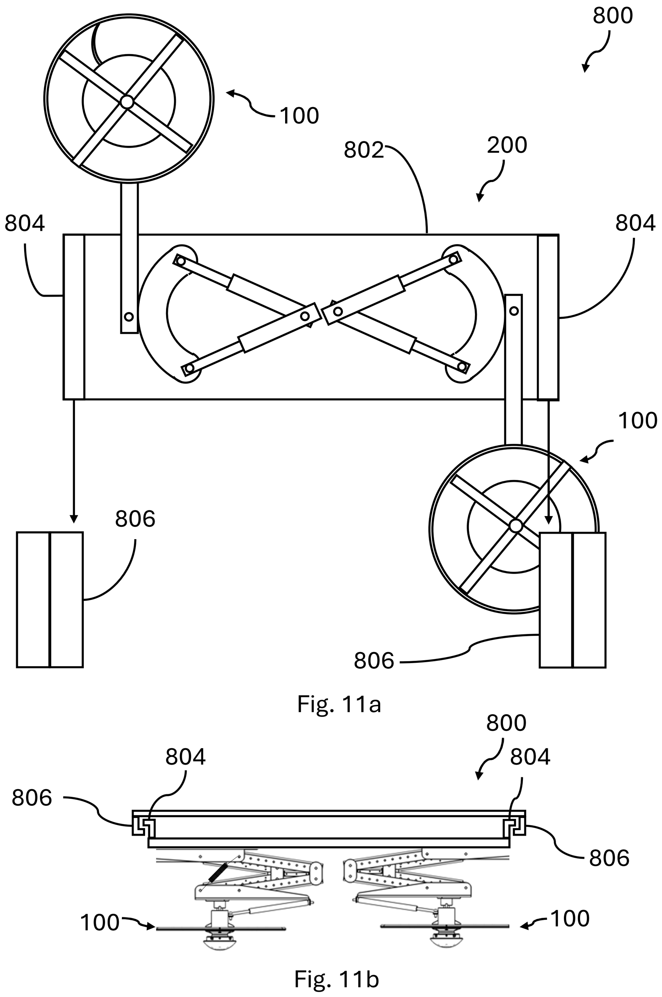

Figures 11a and 11b show a plant cutting system 800. The plant cutting system 800 includes two plant cutting devices 100, which may be any plant cutting devices described above. The plant cutting devices 100 are coupled to a common mount 802, which may also be referred to as a common mounting plate 802. As shown in Figure 11b, the plant cutting devices 100 may each be coupled to the common mounting plate 802 via a suspension system.

The plant cutting system 800 includes mounting plate rails 804 positioned at either end of the mounting plate 802. The mounting plate rails 804 may have an L-shaped cross section and may be arranged to engage with respective vehicle body rails 806, which may be coupled to or fixed to a vehicle body, such as the vehicle body 14 shown in Figure 1.

By engagement of the rails 804, 806, the plant cutting system 800 may be coupled to and decoupled from the vehicle body by being slide horizontally relative to the vehicle body. This may provide a fast coupling method not requiring a user to provide a significant force. The rails 804, 806 may also include one or more retaining elements such as detents in order to retain the plant cutting system 800 in place relative to the vehicle body.

Specific examples of the invention are set out in the numbered clauses below:
1. A plant cutting device comprising:
   a mount arranged to couple to a vehicle;
   a cutter arranged to cut vegetation;
   a boom arranged to support the cutter, the boom being pivotally coupled to the mount at a first pivot point;
   a first biasing member arranged to exert a first force on the boom to generate a moment about the first pivot point;
   wherein the first biasing member is arranged to exert a first force on the boom when the boom is displaced from an equilibrium orientation such that the boom lies at the equilibrium orientation unless displaced in a first direction or a second direction by an external force, the force being arranged to return the boom to the equilibrium orientation after removal of the external force.
2. The plant cutting device of clause 1, wherein the first biasing member is arranged to exert the first force in the first direction and wherein the plant cutting device further comprises a second biasing member arranged to exert a second force on the boom to generate a moment about the first pivot point in the second direction, the second direction being opposite to the first direction.
3. A plant cutting device comprising:
   a mount arranged to couple to a vehicle;
   a cutter arranged to cut vegetation;
   a boom arranged to support the cutter, the boom being pivotally coupled to the mount at a first pivot point;
   a first biasing member arranged to exert a first force on the boom to generate a moment about the first pivot point in a first direction; and
   a second biasing member arranged to exert a second force on the boom to generate a moment about the first pivot point in a second direction, the second direction being opposite to the first direction,
   wherein the biasing members are arranged to exert opposing forces on the boom such that the boom lies at an equilibrium orientation unless displaced in the first or second direction by an external force and to return the boom to the equilibrium orientation after removal of the external force.
4. The plant cutting device of any preceding clause, wherein the first and second biasing members are fixed to the mount at a first fixing point.
5. The plant cutting device of any preceding clause, wherein the first and second biasing members are pivotally coupled to the boom.
6. The plant cutting device of any preceding clause, wherein the first and/or second biasing member comprises a sliding piston slidably coupled within an outer cylinder, the outer cylinder and the sliding piston together defining a variable volume chamber containing a gas.
7. The plant cutting device of any preceding claim, wherein the cutter comprises a cutter head having a cutting member extending therefrom and a bump ring surrounding the cutter head, the bump ring being arranged to prevent the cutter head from contacting external objects.
8. The plant cutting device of clause 7, wherein the bump ring is rotatably coupled to the cutting head.
9. The plant cutting device of clause 7 or 8, wherein the cutter comprises a motor coupled to the cutter head via a drive shaft, and wherein the bump ring is rotatably mounted on the drive shaft such that the bump ring is rotatable relative to the drive shaft.
10. The plant cutting device of clause 7, 8 or 9, wherein the bump ring has a diameter that is substantially similar to a cutting diameter of the cutting member.
11. The plant cutting device of any preceding clause, wherein the boom is rotatable about a range of at least 140°.
12. An agricultural vehicle comprising the plant cutting device of any preceding clause.
13. The agricultural vehicle of clause 12, further comprising at least two wheels aligned in a direction of travel, wherein the boom lies perpendicular to the direction of travel in the equilibrium orientation.
14. The agricultural vehicle of clause 12 or 13, wherein the boom is moveable to an orientation where the direction from the first pivot point to the cutter is parallel to the direction of travel of the vehicle and to an orientation where the direction from the first pivot point to the cutter is opposite to the direction of travel of the vehicle.
15. The agricultural vehicle of clause 12, 13 or 14, wherein the plant cutting device is a first plant cutting device, and wherein the agricultural vehicle further comprises a second plant cutting device according to any one of clauses 1 to 10, and
   wherein the boom of the first plant cutting device extends in an opposite direction to the boom of the second plant cutting device.
16. The agricultural vehicle of clause 15, further comprising:
   a vehicle body,
   one or more vehicle body rails fixed to the vehicle body,
   a mounting plate upon which the first and second plant cutting devices are mounted,
   one or more mounting plate rails fixed to the mounting plate and arranged to slidably and releasably engage with the vehicle body rails,
17. The plant cutting device of any one of clauses 7 to 10, further comprising a cover disk, the cover disk extending radially outwardly from the cutter head, having a radius the same as or greater than the cutting member, and defining a solid surface to prevent access to the cutting member from above.
18. The plant cutting device of any one of clauses 1 to 11 or 17, further comprising a bump stop arranged adjacent to the biasing members to prevent the cutter from contacting the biasing members.
19. The plant cutting device of any one of clauses 1 to 11, 17 or 18, further comprising a retaining member arranged to engage with the cutter to maintain the cutter at a second orientation different from the equilibrium orientation.

## Claims

1. A plant cutting device comprising:
a mount arranged to couple to a vehicle;
a cutter arranged to cut vegetation;
a boom arranged to support the cutter, the boom being pivotally coupled to the mount at a first pivot point;
a first biasing member arranged to exert a first force on the boom to generate a moment about the first pivot point;
wherein the first biasing member is arranged to exert a first force on the boom when the boom is displaced from an equilibrium orientation such that the boom lies at the equilibrium orientation unless displaced in a first direction or a second direction by an external force, the force being arranged to return the boom to the equilibrium orientation after removal of the external force.

2. The plant cutting device of claim 1, wherein the first biasing member is arranged to exert the first force in the first direction and wherein the plant cutting device further comprises a second biasing member arranged to exert a second force on the boom to generate a moment about the first pivot point in the second direction, the second direction being opposite to the first direction.

3. The plant cutting device of claim 2, wherein the first and second biasing members are fixed to the mount at a first fixing point, and/or
wherein the first and second biasing members are pivotally coupled to the boom.

4. The plant cutting device of any preceding claim, wherein the first and/or second biasing member comprises a sliding piston slidably coupled within an outer cylinder, the outer cylinder and the sliding piston together defining a variable volume chamber containing a gas.

5. The plant cutting device of any preceding claim, wherein the cutter comprises a cutter head having a cutting member extending therefrom and a bump ring surrounding the cutter head, the bump ring being arranged to prevent the cutter head from contacting external objects.

6. The plant cutting device of claim 5, wherein the bump ring is rotatably coupled to the cutting head, optionally,
wherein the cutter comprises a motor coupled to the cutter head via a drive shaft, and wherein the bump ring is rotatably mounted on the drive shaft such that the bump ring is rotatable relative to the drive shaft.

7. The plant cutting device of claim 5 or 6, wherein the bump ring has a diameter that is substantially similar to a cutting diameter of the cutting member.

8. The plant cutting device of any preceding claim, wherein the boom is rotatable about a range of at least 140°.

9. An agricultural vehicle comprising the plant cutting device of any preceding claim.

10. The agricultural vehicle of claim 9, further comprising at least two wheels aligned in a direction of travel, wherein the boom lies perpendicular to the direction of travel in the equilibrium orientation.

11. The agricultural vehicle of claim 9 or 10, wherein the boom is moveable to an orientation where the direction from the first pivot point to the cutter is parallel to the direction of travel of the vehicle and to an orientation where the direction from the first pivot point to the cutter is opposite to the direction of travel of the vehicle.

12. The agricultural vehicle of claim 9, 10 or 11, wherein the plant cutting device is a first plant cutting device, and wherein the agricultural vehicle further comprises a second plant cutting device according to any one of claims 1 to 8, and
wherein the boom of the first plant cutting device extends in an opposite direction to the boom of the second plant cutting device.

13. The agricultural vehicle of claim 12, further comprising:
a vehicle body,
one or more vehicle body rails fixed to the vehicle body,
a mounting plate upon which the first and second plant cutting devices are mounted,
one or more mounting plate rails fixed to the mounting plate and arranged to slidably and releasably engage with the vehicle body rails,

14. The plant cutting device of any one of claims 5 to 8, further comprising a cover disk, the cover disk extending radially outwardly from the cutter head, having a radius the same as or greater than the cutting member, and defining a solid surface to prevent access to the cutting member from above.

15. The plant cutting device of any one of claims 1 to 8 or 14, further comprising:
a bump stop arranged adjacent to the biasing members to prevent the cutter from contacting the biasing members, and/or
a retaining member arranged to engage with the cutter to maintain the cutter at a second orientation different from the equilibrium orientation.
